# EUROPEAN PATENT SPECIFICATION

(11) **EP 0 702 390 B1**
(45) Date of publication and mention of the grant of the patent: **11.11.1998**
(21) Application number: 95114413.8
(22) Date of filing: 13.09.1995
(51) Int. Cl.: H01J 29/89

(54) **Antireflection type cathode-ray tube and method of manufacturing the same**
Antireflektion-Kathodenstrahlröhre und Verfahren zur Herstellung
Tube à rayons cathodiques du type antiréfléchissant et procédé de fabrication

(30) Priority: 16.09.1994 JP 221282/94; 23.06.1995 JP 157258/95
(43) Date of publication of application: 20.03.1996
(73) Proprietor: KABUSHIKI KAISHA TOSHIBA, Kawasaki-shi (JP)
(72) Inventor: Suzuki, Yoshihiro, c/o Int. Prop. Div., Tokyo 105 (JP); Itou, Takeo, c/o Int. Prop. Div., Tokyo 105 (JP); Onodera, Makoto, c/o Int. Prop. Div., Tokyo 105 (JP); Tanaka, Hajime, c/o Int. Prop. Div., Tokyo 105 (JP)
(74) Representative: Henkel, Feiler, Hänzel

(56) References cited:
- EP-A- 0 131 341
- US-A- 2 536 764
- US-A- 4 560 581
- US-A- 4 723 091
- US-A- 5 189 337
- PATENT ABSTRACTS OF JAPAN vol. 013, no. 201 (E-757) 12 May 1989 & JP-A-01 021 844 (TOSHIBA CORP) 25 January 1989

## Description

The present invention relates to a reflection reduction type cathode-ray tube obtained by forming an antireflection film on the outer surface of the image display portion of a cathode-ray tube and, more particularly, to a reflection reduction type cathode-ray tube, the antireflection film of which is made of a multi-layered optical interfering film having fine depressions and projections, and a method of manufacturing the same.

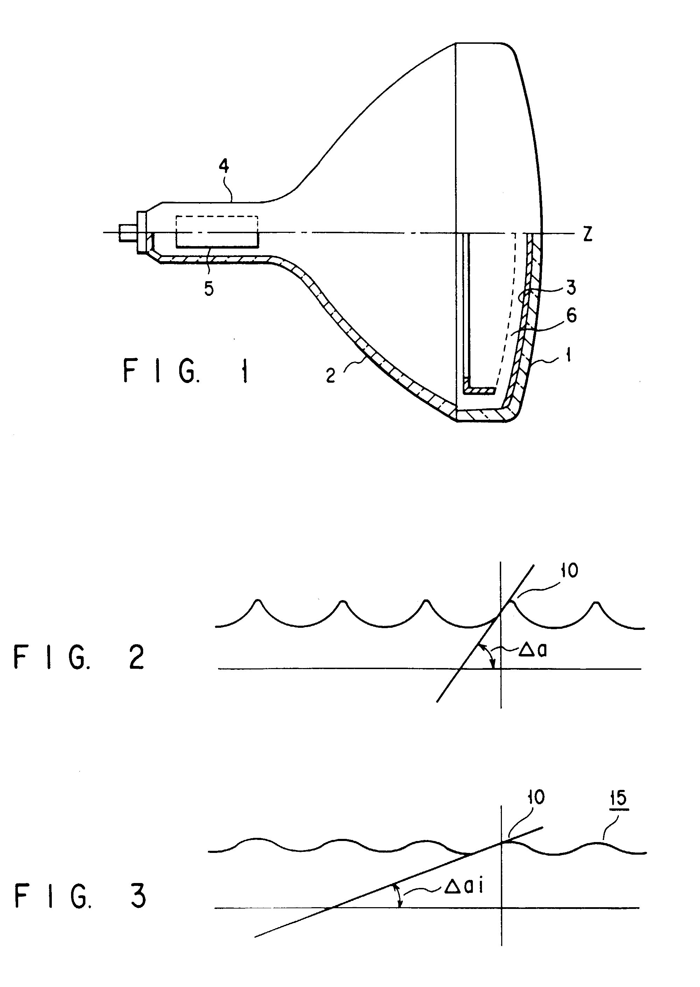

In general, as shown in FIG. 1, a cathode-ray tube has an envelope consisting of a glass panel 1 and a funnel 2. A phosphor screen 3 is formed on the inner surface of the panel 1, and an electron gun assembly 5 is arranged in a neck 4 of the funnel 2. In the cathode-ray tube, this phosphor screen 3 is scanned with electron beams emitted from the electron gun assembly 5, thereby displaying an image. The cathode-ray tube shown in FIG. 1 is a color picture tube. A shadow mask 6 is arranged in the color picture tube to oppose the phosphor screen 3.

In this cathode-ray tube, generally, the outer surface (outer surface of the image display portion) of the glass panel 1 forms a mirror surface. Hence, external light is reflected by this outer surface. The reflected external light overlaps an image formed on the phosphor screen 3 to degrade the contrast of the image seen through the panel 1. In particular, in the display of a computer or the like, since an image is often seen at a short distance, this reflection of the external light causes eye fatigue.

A method of imparting antireflection to the outer surface of the panel conventionally includes, for example, a method of forming depressions and projections on the outer surface of the panel (non-glare process) to diffuse and reflect the external light, so that an apparent reflectance is decreased. More particularly, the method of making depressions and projections on the outer panel surface includes a method of mechanically or chemically treating the outer surface of the panel to directly form depressions and projections on the outer surface of the panel, and a method of coating an alcohol-soluble silicon compound, e.g., silicon alkoxide, on the outer surface of the panel by spraying and thereafter baking the coated compound, thereby forming a coating film having depressions and projections. With the panel subjected to the non-glare process, however, the image seen through the panel is not clear due to the depressions and projections of the surface of the panel, and the resolution is lowered due to the non-glare process. Since the entire panel forms a ground glass plate, the screen is whitened to lower the contrast.

As a method of solving the problems of the panel subjected to the non-glare process, there is developed a method of forming a smooth, multi-layered optical interfering film on the outer surface of the panel by spin coating, so that the reflectance is decreased by the interference of light. According to this method, an antireflection film accompanying no degradation in resolution or a decrease in contrast can be formed. In this method, however, dust may attach to the panel or the film thickness tends to be non-uniform, thus degrading the yield. A spin coating system requires large-sized facilities, e.g., an apparatus for rotating a member to place a coating target thereon, leading to a high manufacturing cost.

It is the first object the present invention to solve the problems of the prior art technique and provide a method of manufacturing a cathode-ray tube whose antireflection film is formed in a simple manner at a high yield and a low cost, so that a cathode-ray tube having a small degradation in resolution and contrast can be obtained.

It is the second object of the present invention to provide a cathode-ray tube having a sufficiently high resolution and contrast by using an antireflection film which is formed in a simple manner at a high yield and a low cost.

According to the first aspect of the present invention, there is provided a method of manufacturing a cathode-ray tube having at least two optical layers on the outer surface of a faceplate, including the step of forming a first optical film by coating a first optical interfering film forming solution on one surface of a faceplate through an external mixing type air spray nozzle, while scanning the air spray nozzle, the faceplate having the other surface formed with a phosphor screen, and the air spray nozzle being adapted to mix the first optical interfering film forming solution and air outside the spray nozzle, and the step of forming a second optical film by coating a second optical interfering film forming solution on the first optical film through the air spray nozzle, while scanning the external mixing type air spray nozzle, thus forming an optical interfering film including the first and second optical films, wherein each of the step of forming the first optical film and the step of forming the second optical film is performed by maintaining a temperature of the faceplate at 20 to 50°C, setting flow rates of each optical interfering film forming solution and air from the air spray nozzle to 10 to 30 cc/min and 80 to 140 l/min, respectively, and setting a scanning speed of the air spray nozzle to 250 to 750 mm/sec, and each of the first and second optical interfering film forming solutions contains 1 to 5 wt% of a solid substance and 10 to 30% of an organic solvent having a boiling point of 120°C to 200°C.

According to the second aspect of the present invention, there is provided a cathode-ray tube comprising a vacuum envelope including a faceplate, a phosphor screen formed on an inner surface of the faceplate, and a multi-layered optical interfering film formed on an outer surface of the faceplate, having an outer surface formed with a plurality of depressions and projections, and having an average angle Δa of inclination and an average peak gap Sm, which are defined in the international standards ISO 4287/1-1984 of surface roughness of depressions and projections, and respectively satisfy relations expressed by following inequalities:
0.1° ≦ Δa ≦ 0.5°
10 µm ≦ Sm ≦ 50 µm

Such a cathode-ray tube can be manufactured in accordance with, e.g., the method of manufacturing the cathode-ray tube according to the first aspect. This method does not require large-size equipment unlike in spin coating, so that an antireflection film can be easily formed at a low cost. When the film having depressions and projections is defined as described above, a cathode-ray tube having small degradation or no degradation in resolution and contrast can be obtained.

This invention can be more fully understood from the following detailed description when taken in conjunction with the accompanying drawings, in which:
FIG. 1 is a view showing the arrangement of a calor picture tube which does not have a conventional antireflection film;
FIGS. 2 and 3 are graphs for explaining the depressions and projections of antireflection films for a cathode-ray tube according to the present invention;
FIG. 4 is a view showing the arrangement of a calor picture tube according to an embodiment of the present invention;
FIG. 5 is a partial schematic diagram showing the distal end portion of an air spray nozzle used in the present invention;
FIG. 6 is a graph showing the relationship between the average peak gap of the optical interfering film and the flow rates of the optical interfering film forming solution and air from the air spray nozzle;
FIG. 7 is a graph showing the relationship between the average peak gap of the optical interfering film and the scanning speed of the spray of the optical interfering film forming solution with respect to the outer surface of the panel;
FIG. 8 is a graph showing the relationship between the temperature of the outer surface of the panel, and the average angle of inclination of the optical interfering film when the content of a high-boiling solvent in the optical interfering film forming solution is changed; and
FIG. 9 is a graph showing the relationship between the average angle of inclination of the optical interfering film and the contents of solid substance in the optical interfering film forming solution when the content of the high-boiling solvent is changed.

The present invention concerns an improvement, especially cost reduction, of an antireflection film to be formed on the outer surface of the display surface of a cathode-ray tube.

The first aspect of the present invention provides a method of manufacturing a cathode-ray tube including an improved manufacturing process of an antireflection film.

The method of manufacturing the cathode-ray tube according to the first aspect of the present invention will be described.

According to the method of manufacturing the cathode-ray tube of the first aspect of the present invention, basically, a plurality of types of optical interfering film forming solutions are coated on the outer surface of the faceplate (image display portion) of the cathode-ray tube to form a multi-layered film having at least two layers, and this multi-layered film is baked, thereby forming an antireflection film comprising a multi-layered optical interfering film on the outer surface of the image display portion. The characteristic feature of this method resides in that i) an external mixing type air spray nozzle for mixing an optical interfering film forming solution and air outside the air spray nozzle is used as the coating means; ii) the optical interfering film forming solution is sprayed from the air spray nozzle while scanning the air spray nozzle on the outer surface of the image display portion, thereby coating the optical interfering film forming solution; iii) as the coating conditions in use of the air spray nozzle, the flow rates of optical interfering film forming solution and air from the air spray nozzle are set to 10 to 30 cc/min and 80 to 140 l/min, respectively, the scanning speed of the spray with respect to the outer surface of the image display portion is set to 250 to 750 mm/sec, and the temperature of the outer surface of the image display portion before coating the optical interfering film forming solution is set to 20 to 50°C; and iv) each optical interfering film forming solution contains 1 to 5 wt% of a solid substance and 10 to 30% of an organic solvent having a boiling point of 120°C to 200°C.

The second aspect of the present invention provides a cathode-ray tube having an improved antireflection film.

According to the second aspect of the present invention, there is provided a cathode-ray tube in which an antireflection film comprising a multi-layered optical interfering film having fine depressions and projections is formed on the outer surface of the image display portion thereof, and an average angle Δa of inclination and an average peak gap Sm of the depressions and projections film which are defined in the international standards ISO 4287/1-1984 respectively satisfy
0.1° ≦ Δa ≦ 0.5°
10 µm ≦ Sm ≦ 50 µm

In film formation employing spraying, when particles of a film forming solution sprayed from the air spray nozzle collide with the outer surface of the image display portion, the spherical particles solidify to form a crater-like shape, thus obtaining a film having fine depressions and projections. Hence, in conventional spraying, it is difficult to form a smooth film required as an optical interfering film. However, if the average angle of inclination and the average peak gap of the film having depressions and projections are regulated as described in the second aspect of the present invention to form a film having depressions and projections close to a smooth film, this film can serve as an antireflection film comprising a multi-layered optical interfering film having small degradation in resolution and contrast.

In general, the parameters indicating the surface roughness of a film having depressions and projections include a maximum height Rmax and a ten-point average roughness Rz defined in the JIS standards B0601. A film having depressions and projections regulated by these parameters is shown in, e.g., Jpn. Pat. Appln. KOKAI Publication Nos. 63-80451 and 1-286240. To obtain a film close to a smooth film by regulating the maximum height Rmax and the ten-point average roughness Rz, the maximum height Rmax and the ten-point average roughness Rz must be decreased. Even when, however, the maximum height Rmax and the ten-point average roughness Rz are decreased, if the distal ends of the projecting portions become sharp, the obtained film is not very effective as an antireflection film comprising an optical interfering film. In other words, in order to use an optical interfering film having an irregular surface as a sufficiently effective antireflection film, the distal end portions of the projecting portions must be formed as moderate slopes.

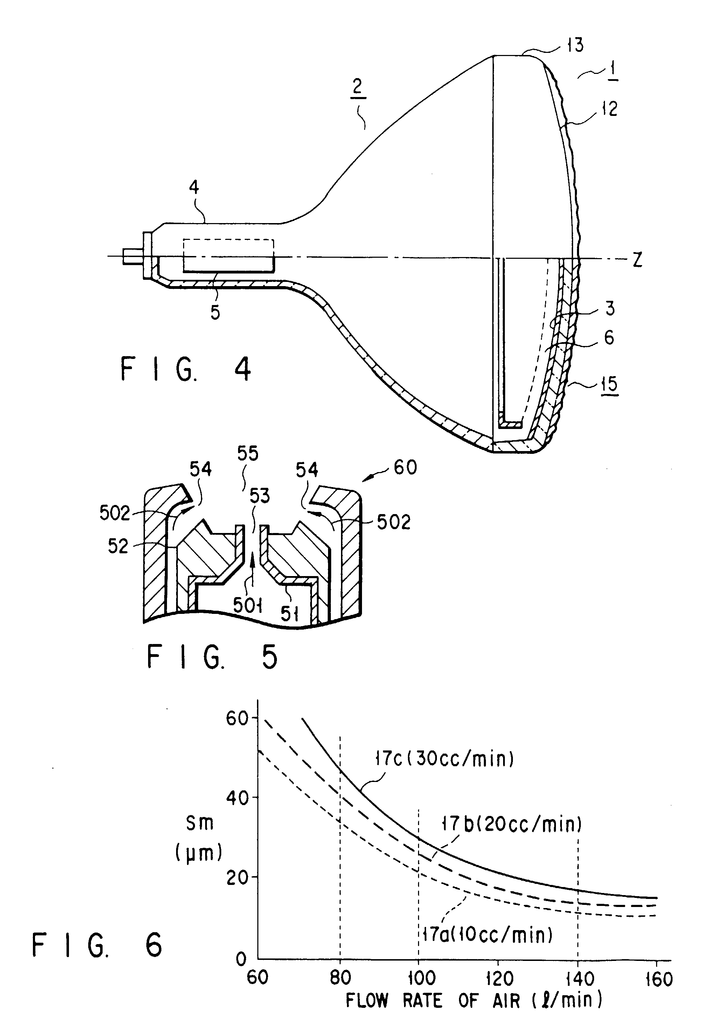

The parameters that concern the shape of the distal end portions of the projecting portions include the average angle Δa of inclination defined in the international standards ISO 4287/1-1984. FIGS. 2 and 3 show graphs for explaining the depressions and projections of antireflection films. Generally, when the average angle Δa of inclination is large, the angle of the distal end portions of projecting portions 10 becomes small, as shown in FIG. 2, thus forming the projecting portions 10 to be sharp. Inversely, when the average angle Δa of inclination is small, the angle of the distal end portions of projecting portions 10 becomes large, as shown in FIG. 3 (Δai), thus forming a film having depressions and projections close to a smooth film and having projecting portions 10 having moderate slopes. Therefore, to obtain an antireflection film comprising an optical interfering film having an irregular surface, the average angle Δa of inclination must be regulated.

When the pitch of the projections is large, not only the pattern of projections and depressions becomes visible, but also glare of the screen and degradation in resolution occur. Parameters that express the pitch of the projections include an average peak gap Sm. In order to obtain a refection reducing film comprising an optical interfering film having an irregular surface with an invisible irregular pattern without causing glare of the screen and degradation in resolution, the average peak gap Sm must be regulated.

In a conventional antireflection film subjected to the non-glare process, the outer surface of the image display portion usually has projecting portions with an average angle Δa of inclination of 1.5° to 3.0°. In contrast to this, in the optical interfering film used in the present invention, the average angle Δa of inclination is expressed as
0.1° ≦ Δa ≦ 0.5°
preferably
0.1° ≦ Δa ≦ 0.3°
and more preferably
0.1° ≦ Δa ≦ 0.2°

In order to obtain an optical interfering film which makes the irregular pattern invisible and which does not cause glare of the screen and degradation in resolution, Sm may be set to satisfy
10 µm ≦ Sm ≦ 50 µm preferably
10 µm ≦ Sm ≦ 30 µm
and more preferably
10 µm ≦ Sm ≦ 20 µm
Thus, a film which can be used as an optical interfering film is obtained. Furthermore, an antireflection film having small degradation in resolution and contrast can be obtained.

In order to form such an antireflection film by spraying, the type of air spray nozzle, the spraying conditions, and the compositions of the optical interfering film forming solutions must be limited.

In order to reduce the pitch of the projections of the antireflection film to be formed, the diameter of the particles of the optical interfering film forming solution to be sprayed from the air spray nozzle must be decreased. When an optical interfering film forming solution is sprayed with the air spray, the diameter of the particles of the optical interfering film forming solution can be controlled by the type of spray nozzle and the flow rates of the optical interfering forming solution and air from the spray nozzle.

Regarding the type of spray nozzle, the studies conducted by the present inventors and the like have made it clear, through the result of experiments, that an external mixing type air spray nozzle for mixing an optical interfering film forming solution and air outside the spray nozzle is suitable to make spray particles small.

Since an air spray sprays an optical interfering film forming solution in the form of fine particles by mixing with air, when the flow rate of air is increased relative to the flow rate of the optical interfering film forming solution, the diameter of the particles of the optical interfering film forming solution can be decreased. This particle diameter reduction includes to relatively decrease the flow rate of the optical interfering film forming solution and to increase the flow rate of air. When, however, the flow rate of the optical interfering film forming solution is decreased, the solution must be coated many times in order to obtain a predetermined film thickness, which is disadvantageous in terms of production. Inversely, when the flow rate of air is increased, the particles of the optical interfering film forming solution often rebound from the outer surface of the display portion to be sprayed, thereby decreasing the coating efficiency. Therefore, as the spraying conditions, the flow rate of the optical interfering film forming solution from the air spray nozzle is set to 10 to 30 cc/min, preferably 15 to 25 cc/min, and more preferably 20 cc/min, and the flow rate of air is set to 80 to 140 l/min, preferably 100 to 120 l/min, and more preferably 110 l/min.

The particles of the optical interfering film forming solution sprayed from the air spray nozzle are deformed into a crater-like shape upon colliding with and attaching to the outer surface of the image display portion. In this case, when the attaching particles of the optical interfering film forming solution are not dried at once but left to stand still, the depressions and the projections of the craters are moderated into moderate slopes. When the particles are dried after the depressions and the projections are moderated into moderate slopes in this manner, the obtained film can be smoothly. However, if drying is delayed too long, the projections tends to aggregate adjacent particles of the optical interfering film forming solution, thus forming circular patterns having a large pitch of corrugations, which adversely affects glare of the screen. Therefore, the drying time of the particles of the optical interfering film forming solution attaching to the outer surface of the image display portion may be carefully controlled. The drying time of the particles of the optical interfering film forming solution can vary depending on parameters such as the temperature of the outer surface of the image display portion before coating the optical interfering film forming solution, the content of a solid substance of the optical interfering film forming solution and the boiling point of the solvent of the optical interfering film forming solution, the scanning speed of the optical interfering film forming solution sprayed with respect to the outer surface of the image display portion, and the like.

Of these parameters, regarding the scanning speed of the spray with respect to the outer surface of the image display portion, if it is excessively low, the amount of solution per unit area coated by one scanning operation is increased to delay drying, leading to glare of the screen caused by the aggregation of the spray particles of the optical interfering film forming solution. If it is excessively high, the number of scanning cycles must be increased, posing a problem in productivity. An appropriate scanning speed may be 250 to 750 mm/sec when the flow rates of the optical interfering film forming solution and air from the air spray nozzle are regulated in the manner as described above.

Regarding the temperature of the outer surface of the image display portion before coating the optical interfering film forming solution, if it is decreased, the depressions and projections due to the particles of the optical interfering film forming solution attaching to the outer surface of the image display portion can be moderated regardless of the composition of the optical interfering film forming solution. In this case, however, drying takes time, leading to glare of the screen caused by the aggregation of the particles of the optical interfering film forming solution. In order to decrease the temperature below room temperature, a cooling device is required, which is not preferable in terms of productivity. When the temperature of the outer surface of the image display portion before coating the optical interfering film forming solution is increased, the optical interfering film forming solution is dried quickly, so that the distal end portions of the projecting portions of the formed film become sharp.

Regarding the solid substance of optical interfering film forming solution and the boiling point of the solvent of the optical interfering film forming solution, it has become obvious from the result of experiments that the boiling point and the content of the high-boiling organic solvent, having a boiling point of 120 to 200° with respect to the amount optical interfering film forming solution of the solid substance are almost corelated to each other.

As a result, when the temperature of the outer surface of the image display portion was set to 20 to 50°C, the average angle Δa of inclination of the projecting portions of the optical interfering film formed by an optical interfering film forming solution, which contains 10 to 30% of an organic solvent having a boiling temperature of 120 to 200°C and 1 to 5 wt% of a solid substance, can be set to satisfy
0.1° ≦ Δa ≦ 0.5°

The temperature of the outer surface of the image display portion, the content of the solid substance, and the content of the solvent can be changed as required by changing the composition of each optical interfering film forming solution.

When a multi-layered antireflection film is formed by using the method of the present invention, not only a required antireflection film can be easily formed on the outer surface of the image display portion at a low cost in accordance with spraying, but also an anti-reflection film having a shape close to that of a smooth film can be obtained. When such an antireflection film is used, a cathode-ray tube having a sufficiently high resolution and contrast can be obtained. In addition to the effect of the optical interfering film comprising a smooth film, an effect of decreasing the apparent reflectance without decreasing the reflectance of the optical interfering film too much can also be expected due to the slight non-glare effect obtained by the depression and the projections of the optical interfering film.

The present invention will be described with reference to a preferred embodiment in conjunction with the accompanying drawings.

FIG. 4 is a schematic diagram of a color picture tube as an arrangement of the cathode-ray tube according to the present invention. This color picture tube has an envelope consisting of a glass panel 1 and a funnel 2 integrally bonded to the panel 1. The panel 1 is obtained by forming a skirt portion 13 around an effective portion 12 of the display surface. A phosphor screen 3 comprising three color phosphor layers that emit blue, green, and red light beams are formed on the inner surface of the effective portion 12 of the panel 1. A shadow mask 6 is arranged on the inner side of the phosphor screen 3 to oppose it. An electron gun assembly 5 for emitting three electron beams is disposed in a neck 4 of the funnel 2.

The three electron beams emitted from the electron gun assembly 5 are deflected by a magnetic field generated by a deflecting unit (not shown) mounted on the outer surface of the funnel 2 to horizontally and vertically scan the phosphor screen 3 through the shadow mask 6, thereby displaying a color image.

Furthermore, in this color picture tube, an antireflection film 15 comprising a multi-layered optical interfering film is formed on the outer surface of the effective portion 12 (image display portion) of the panel 1 that displays the image. In particular, the antireflection film 15 of this embodiment is constituted by multi-layered films combined with optical layers having different refraction, respectively layer. The depressions and the projections of the surface of the outermost layer of the antireflection film 15 have an average angle Δa of inclination and an average peak gap Sm, both defined in the international standards ISO 4287/1-1984, respectively satisfying 0.1° ≦ Δa ≦ 0.5°, as shown in FIG. 3, and 10 µm ≦ Sm ≦ 50 µm.

The average angle Δa of inclination preferably satisfies
0.1° ≦ Δa ≦ 0.3°
and more preferably
0.1° ≦ Δa ≦ 0.2°
and the average peak gap Sm preferably satisfies
10 µm ≦ Sm ≦ 30 µm
and more preferably
10 µm ≦ Sm ≦ 20 µm

To manufacture this color picture tube, first, a color picture tube having no antireflection film on the outer surface of the effective portion 12 of the panel 1 is manufactured by a known method. The outer surface of the effective portion 12 of the panel 1 is cleaned by etching it with an aqueous solution of fluorine, ammonium fluoride, or the like and by washing it with water, thereby forming an antireflection film comprising a multi-layered optical interfering film consisting of layers having different refractive index, respectively.

Each of the plurality of types of optical interfering film forming solutions for forming multilayer is coated by moving the color picture tube and the air spray nozzle relative to each other and scanning the outer surface of the effective portion 12 with the corresponding optical interfering film forming solution sprayed from the spray nozzle. As the spray nozzle, an external mixing type air spray nozzle for mixing the optical interfering film forming solution and air outside the spray nozzle is used. FIG. 5 is a schematic diagram showing the distal end portion of an arrangement of this spray nozzle. As shown in FIG. 5, the distal end portion of this external mixing type spray nozzle has a main body 60 divided into a liquid cap 51 having a solution discharge port 53 and air cap 52 having an air discharge port 54. In the main body 60, an optical interfering film forming solution is discharged from the solution discharge port 53 of the liquid cap 51 as shown in arrow 501, and air is discharged from the air discharge port 54 of the air cap 52 as shown in arrow 502. At a mixing area 55 outside the main body 60, air and the optical interfering film forming solution are mixed and sprayed in the direction indicated by arrows. As the spraying conditions, the flow rate of the optical interfering film forming solution from the air spray nozzle is set to 10 to 30 cc/min, preferably 15 to 25 cc/min, and more preferably 20 cc/min, the flow rate of air is set to 80 to 140 l/min, preferably 100 to 120 l/min, and more preferably 110 l/min, the scanning speed of the spray with respect to the outer surface of the effective portion 12 is set to 250 to 750 mm/sec and preferably 300 to 500 mm/sec, and the temperature of the outer surface of the effective portion 12 before coating the optical interfering film forming solution is set to 20°C to 50°C. An optical interfering film forming solution containing 1 to 5 wt% of a solid substance containing SiO₂ as the major component and 10 to 30% of an organic solvent having a boiling point of 120 to 200°C, is employed.

As described above, if the antireflection film 15 to be formed on the outer surface of the effective portion 12 of the panel 1 is constituted by a multilayered optical interfering film having irregular surface, and an average angle Δa of inclination and an average peak gap Sm, both defined in the international standards ISO 4287/1-1984, of the projecting portions of the irregular films respectively satisfy
0.1° ≦ Δa ≦ 0.5°
10 µ ≦ Sm ≦ 50 µm
then a film having fine depressions and projections close to a moderate-slope smooth film, the distal end portions of the projecting portions of which have a small angle, is formed. Even if the reflectance of the optical interfering film is not very low, the apparent reflectance can be decreased due to the slight non-glare effect obtained by the fine depressions and projections. Thus, an antireflection film constituted by a high-quality multi-layered optical interfering film having small degradation in resolution and contrast, similarly as in the multi-layered optical interfering film comprising ordinary smooth films, can be obtained.

In addition, the antireflection film 15 comprising such a multi-layer optical interfering film can be stably formed in accordance with spraying by limiting the type of spray nozzle, the spraying conditions, the drying time of the optical interfering film forming solutions coated on the outer surface of the effective portion 12 of the panel 1, and the compositions of the optical interfering film forming solutions.

In order to reduce the average peak gap Sm (the pitch of the corrugations) of the antireflection film to be formed, the particle diameter of the particles of the optical interfering film forming solution to be sprayed from the air spray nozzle can be decreased. When an optical interfering film forming solution is sprayed with the air spray, the diameter of the particles of the optical interfering film forming solution can be controlled by the type of spray nozzle and the spraying conditions, i.e., the flow rates of optical interfering forming solution and air from the spray nozzle.

Regarding the type of spray nozzle, from the result of experiments, an external mixing type air spray nozzle for mixing an optical interfering film forming solution and air outside the spray nozzle was suitable to make spray particles smaller.

At this time, the flow rate of air is increased relative to the flow rate of the optical interfering film forming solution, so that the diameter of the particles of the optical interfering film forming solution is decreased. As described above, this particle diameter reduction includes a method of relatively decreasing the flow rate of the optical interfering film forming solution and a method of increasing the flow rate of air. When the flow rate of the optical interfering film forming solution is decreased, the solution must be coated many times to obtain a predetermined film thickness, which is disadvantageous in terms of production. Inversely, when the flow rate of air is increased, the particles of the optical interfering film forming solution often rebound from the outer surface of the effective portion 12 of the panel 1, thereby decreasing the coating efficiency.

From these findings, the change in average peak gap Sm was examined by changing the flow rates of optical interfering film forming solution and air from the apr spray nozzle. The result shown in FIG. 6 is obtained. In FIG. 6, changes in average peak gap Sm obtained when the flow rate of the optical interfering film forming solution was set to 10 cc/min, 20 cc/min, and 30 cc/min are indicated by curves 17a, 17b, and 17c, respectively. As shown in FIG. 6, according to this result, to obtain an optical interfering film to be formed which has an average peak gap Sm satisfying
10 µm ≦ Sm ≦ 50 µm
the flow rates of optical interfering film forming solution and air are most preferably set to 10 to 30 cc/min and 80 to 140 l/min, respectively, and to obtain an optical interfering film to be formed which has a good average peak gap Sm satisfying
10 µm ≦ Sm ≦ 20 µm
the flow rates of optical interfering film forming solution and air are most preferably set to 20 cc/min and 110 l/min, respectively. To increase coating efficiency, it is also found that the flow rate of the solution preferably set to as large as possible and the flow rate of the air preferably set to as small as possible.

The particles of the optical interfering film forming solution sprayed from the air spray nozzle are deformed into a crater-like shape upon colliding with and attaching to the outer surface of the effective portion 12 of the panel 1. When the attaching particles of the optical interfering film forming solution are not dried at once but left to stand still, the depressions and projections of the craters are gradually moderated into moderate slopes. Eventually, the depressions and projections are aggregate adjacent particles of the optical interfering film forming solution, thus forming circular patterns having a large pitch of projections. Then, glare of the screen is adversely affected. Therefore, to form an anti-reflection film as a moderate-slope irregular film, it is preferable to control the drying time so that the particles of the optical interfering film forming solution are dried after the depressions and projections of the craters are moderated to form moderate slopes. The drying time of the particles of the optical interfering film forming solution sprayed with the air spray nozzle varies depending on the scanning speed of the optical interfering film forming solution sprayed with respect to the outer surface of the effective portion 12 of the panel 1, the temperature of the outer surface of the effective portion 12 of the panel 1 before coating the optical interfering film forming solution, the boiling point of the optical interfering film forming solution and the content of the solid substance of the optical interfering film forming solution, and the like.

Of these parameters, regarding the scanning speed of the optical interfering film forming solution sprayed with respect to the outer surface of the effective portion 12 of the panel 1, if it is excessively low, the amount of solution per unit area coated by one scanning operation is increased to delay drying, leading to glare of the screen caused by the aggregation of the particles of the optical interfering film forming solution. If it is excessively high, the number of times of the scanning operation must be increased, posing a problem in productivity.

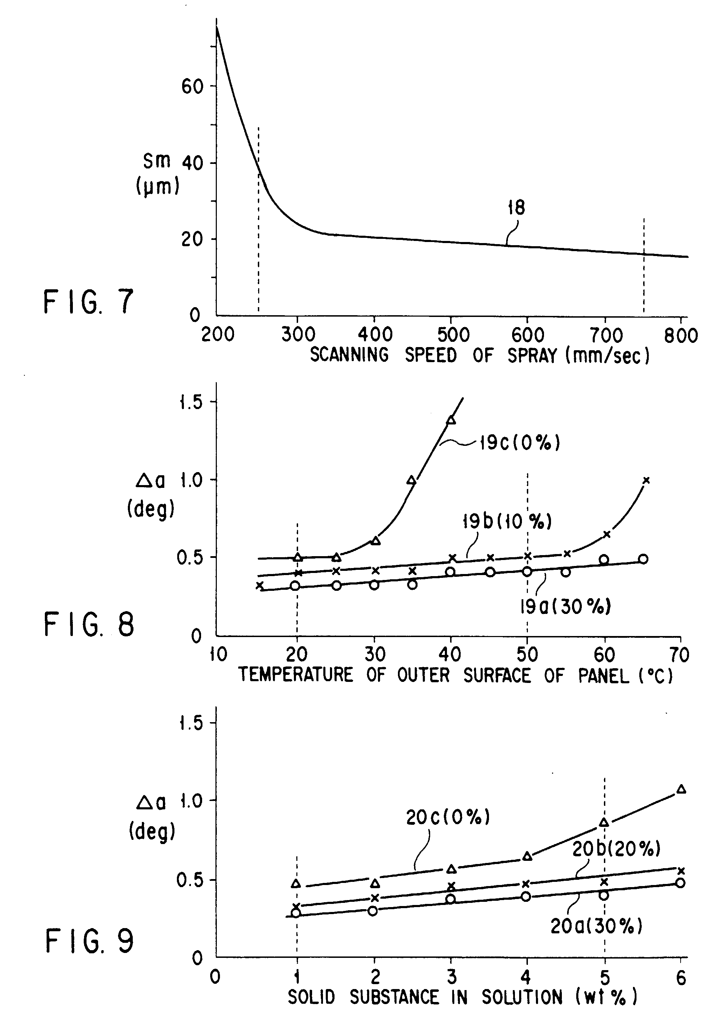

FIG. 7 shows the relationship between the scanning speed of the optical interfering film forming solution sprayed with respect to the outer surface of the effective portion of the panel and the average peak gap Sm of the optical interfering film to be formed. In FIG. 7, the temperature of the outer surface of the effective portion of the panel before coating the optical interfering film forming solution is set to 30°C and the flow rates of the optical interfering film forming solution and air from the air spray nozzle are respectively set to 20 cc/min and 100 l/min. In the case wherein an optical interfering film forming solution containing 2.0 wt% of a solid substance is sprayed, an appropriate scanning speed with which the average peak gap Sm of the optical interfering film to be formed can apparently satisfy
10 µm ≦ Sm ≦ 50 µm
may be 250 mm/sec or more, but if the scanning speed is too high, a large number of coating times are required. Therefore the scanning speed may be 250 to 750 mm/sec and preferably 300 to 500 mm/sec.

Regarding the temperature of the outer surface of the effective portion of the panel before coating the optical interfering film forming solution, if it is low, the projections of the particles of the optical interfering film forming solution attaching to the outer surface of the image display portion can be moderated almost regardless of the composition of the optical interfering film forming solution. In this case, however, drying takes time, leading to glare of the screen. In order to decrease the temperature below room temperature (20°C), a cooling device is required, which is not preferable in terms of productivity. When the temperature of the outer surface of the effective portion of the panel before coating the optical interfering film forming solution is increased, the optical interfering film forming solution is dried quickly, so that the distal end portions of the projecting portions of the formed film having depressions and projections become sharp, causing a degradation in resolution. Therefore, regarding the temperature of the outer surface of the effective portion of the panel before coating the optical interfering film forming solution, this temperature must be set to such a value with which glare of the screen is not caused and the distal end portions of the projecting portions of the optical interfering film are moderated.

Regarding the boiling point of the optical interfering film forming solution and the content of the solid substance of the optical interfering film forming solution, it has become obvious from the result of experiments that the boiling point of the optical interfering film forming solution and the content of the high-boiling organic solvent, having a boiling point of 120°C to 200°C, and the coating solution are corelated to each other. Hence, the relationship between the temperature of the outer surface of the effective portion of the panel and the average angle Δa of inclination of the depressions and projections of the optical interfering film to be formed was examined by using optical interfering film forming solutions containing different amounts of methyl cellosolve (boiling point: 124.5°C) as the high-boiling solvent. Curves 19a, 19b, and 19c shown in FIG. 8 respectively indicate the relationships between the temperatures of the outer surface of the effective portion of the panel and the average angles Δa of inclination of the projections of the optical interfering films to be formed when the contents of methyl cellosolve in the optical interfering film forming solutions each containing 2.0 wt% of the solid substance are set to 30%, 10%, and 0%, respectively, under the conditions that the flow rates of optical interfering film forming solution and air from the air spray nozzle are respectively set to 20 cc/min and 110 l/min, and the scanning speed of the optical interfering film forming solution sprayed with respect to the outer surface of the effective portion of the panel is set to 350 mm/sec.

FIG. 9 shows the relationship between the content of the solid substance of the optical interfering film forming solution and the average angle Δa of inclination of the corrugations. Curves 20a, 20b, and 20c respectively indicate the relationships between the contents of the solid substance and the average angles Δa of inclination of the projections of the optical interfering films to be formed when the contents of methyl cellosolve are set to 30%, 10%, and 0% with respect to the coating solution, respectively, under the conditions that the flow rates of the optical interfering film forming solution and air from the spray nozzle are respectively set to 20 cc/min and 110 l/min, the scanning speed of the optical interfering film forming solution sprayed with respect to the outer surface of the effective portion of the panel is set to 350 mm/sec, and the temperature of the outer surface of the effective portion of the panel before coating the optical interfering film forming solution is set to 30°C.

From FIGS. 8 and 9, when the temperature of the outer surface of the effective portion of the panel before coating the optical interfering film forming solution is set to 20 to 50°C and an optical interfering film forming solution containing 1 to 5 wt% of a solid substance and 10 to 30% of a high-boiling organic solvent having a boiling point of 120°C to 200°C is sprayed, the average angle Δa of the projecting portions of the antireflection film can be apparently set to satisfy
0.1° ≦ Δa ≦ 0.5°

More specifically, when an air spray nozzle is used, the flow rates of the optical interfering film forming solution and air from the air spray nozzle are respectively set to 10 to 30 cc/min and 80 to140 cc/min, the scanning speed of the spray with respect to the outer surface of the effective portion is set to 250 to 750 mm/sec, the temperature of the outer surface of the effective portion before coating the optical interfering film forming solution is set to 20 to 50°C, and an optical interfering film forming solution containing 1 to 5 wt% of a solid substance and 10 to 30% of a high-boiling organic solvent having a boiling point of 120°C to 200°C is sprayed, the average angle Δa of inclination and the average peak gap Sm of the corrugations of the optical interfering film to be formed can be respectively set to satisfy
0.1° ≦ Δa ≦ 0.5°
10 µm ≦ Sm ≦ 50 µm
When the flow rates of the optical interfering film forming solution and air are respectively set to 20 cc/min and 110 cc/min, the average angle Δa of inclination and the average peak gap Sm can be set to satisfy
0.1° ≦ Δa ≦ 0.3°
10 µm ≦ Sm ≦ 20 µm
which is particularly preferable.

In the following description, a solution A is a high-refraction optical interfering film forming solution, a solution B is an intermediate-refraction optical interfering film forming solution, and a solution C is a low-refraction optical interfering film forming solution. Practical examples wherein antireflection films each comprising a multi-layered optical interfering film are formed by arbitrarily combining the solutions A, B, and C will be described.

| Solution A (High-Refraction Optical Interfering Film Forming Solution) | |
|---|---|
| ethyl silicate solution dispersed with fine SnO₂ particles (solid substance: 3 wt%) | 20% |
| selective light-absorbing dye (solid substance: 20 wt%) | 5% |
| ethyl alcohol (boiling point: 78.32°C) | 25% |
| isopropyl alcohol (boiling point: 82.4°C) | 18% |
| n-butyl alcohol (boiling point: 117.25°C) | 18% |
| n-pentyl alcohol (boiling point: 138.25°C) | 4% |
| methyl cellosolve (boiling point: 124.5°C) | 8% |
| butyl cellosolve (boiling point: 171.2°C) | 2% |

| Solution B (Intermediate-Refraction Optical Interfering Film Forming Solution) | |
|---|---|
| ethyl silicate solution dispersed with fine SnO₂ particles (solid substance: 3 wt%) | 50% |
| isopropyl alcohol (boiling point: 82.4°C) | 15% |
| n-butyl alcohol (boiling point: 117.25°C) | 15% |
| n-pentyl alcohol (boiling point: 138.25°C) | 20% |

| Solution C (Low-Refraction Optical Interfering Film Forming Solution) | |
|---|---|
| ethyl silicate solution (solid substance: 4 wt%) | 50% |
| isopropyl alcohol (boiling point: 82.4°C) | 15% |
| n-butyl alcohol (boiling point: 117.25°C) | 15% |
| n-pentyl alcohol (boiling point: 138.25°C) | 20% |

### Example 1

The outer surface of the effective portion of the panel of a color picture tube was cleaned by washing. The outer surface of the effective portion was heated to 30°C. As the air spray nozzle, an Air Atomizing Nozzle PF 1650 + PA 67228-45°C (trade name) available from Spraying System was used. By setting the flow rates of the solution A and air to 20 cc/min and 100 l/min, respectively, and the scanning speed of the spray with respect to the outer surface of the effective portion of the panel to 350 mm/sec, the solution A was coated and dried to obtain a coating film. The outer surface of the effective portion of this panel was set to 30°C and the solution C was coated and dried under the same conditions as those for coating the solution A, thus obtaining a coating film. Thereafter, the outer surface of the effective portion of this panel was heated to 200°C and baked. An antireflection film comprising a two-layered optical interfering film (a high-refraction layer and a low-refraction layer) was thus obtained.

The average angle of inclination (deg), the average peak gap (µm), and the luminous regular reflection factor (%) of the obtained antireflection film were measured. Also, glare and resolution were evaluated. Table 1 shows the results of the measurement and evaluation. o and x shown as the judgment of glare and resolution indicate that the corresponding layer has no problem and is thus good, and defective, respectively.

When a single-layered film is formed by using the solution A under the same coating conditions as in Example 1, a high-refraction film having a refractive index of about 1.70 to 1.80 can be obtained.

When a single-layered film is formed by using the solution B, an intermediate-refraction film having a refractive index of about 1.55 to 1.60 can be obtained.

When a single-layered film is formed by using the solution C, a low-refraction film having a refractive index of about 1.40 to 1.50 can be obtained.

The multi-layered optical interfering film which is useful as the antireflection film has a luminous regular reflection factor falling within a range of about 1.8 or smaller.

### Example 2

The outer surface of the effective portion of the panel of a color picture tube was cleaned by washing in the same manner as in Example 1. The outer surface of the effective portion was heated to 30°C. As the air spray nozzle, an Air Atomizing Nozzle PF 1650 + PA 67228-45°C manufactured by Spraying System was used. By setting the flow rates of the solution B and air to 20 cc/min and 100 l/min, respectively, and the scanning speed of the spray with respect to the outer surface of the effective portion of the panel to 350 mm/sec, the solution B was coated and dried to obtain a coating film. The outer surface of the effective portion of this panel was set to 30°C and the solution A was coated and dried under the same conditions as those for coating the solution B, thus obtaining a coating film. The solution C was coated on the obtained film and dried under the same conditions as those for coating the solution B to obtain a coating film. Thereafter, the outer surface of the effective portion of this panel was heated to 200°C and baked. An antireflection film comprising a two-layered optical interfering film (an intermediate-refraction layer, a high-refraction layer and a low-refraction layer) was thus obtained. The average angle of inclination (deg), the average peak gap (µm), and the luminous regular reflection factor (%) of the obtained antireflection film were measured in the same manner as in Example 1. Also, the glare and resolution were evaluated. Table 1 shows the results of the measurement and evaluation.

### Example 3

The outer surface of the effective portion of the panel of a color picture tube was cleaned by washing in the same manner as in Example 1. The outer surface of the effective portion was heated to 30°C. As the air spray nozzle, an Air Atomizing Nozzle PF 1650 + PA 67228-45°C available from Spraying System was used. By setting the flow rates of the solution B and air to 30 cc/min and 135 l/min, respectively, and the scanning speed of the spray with respect to the outer surface of the effective portion of the panel to 500 mm/sec, the solution B was coated and dried to obtain a coating film. The outer surface of the effective portion of this panel was set to 30°C again, and the solution A was coated and dried under the same conditions as those for coating the solution B, thus obtaining a coating film. Subsequently, the outer surface of the effective portion of this panel was set to 30°C again, and the solution C was coated and dried under the same conditions as those for coating the solution A, thus obtaining a coating film. Thereafter, the outer surface of the effective portion of this panel was heated to 200°C and baked. An antireflection film comprising a three-layered optical interfering film (an intermediate-refraction layer, a high-refraction layer, and a low-refraction layer) was thus obtained.

The average angle of inclination (deg), the average peak gap (µm), and the luminous regular reflection factor (%) of the obtained antireflection film were measured. Also, the glare and resolution were evaluated. Table 1 shows the results of the measurement and evaluation.

### Example 4

The outer surface of the effective portion of the panel of a color picture tube was cleaned by washing in the same manner as in Example 1. The outer surface of the effective portion was heated to 30°C. As the air spray nozzle, an Air Atomizing Nozzle PF 1650 + PA 67228-45°C available from Spraying System was used. By setting the flow rates of the solution A and air to 12 cc/min and 85 l/min, respectively, and the scanning speed of the spray with respect to the outer surface of the effective portion of the panel to 280 mm/sec, the solution A was coated and dried to obtain a coating film. The outer surface of the effective portion of this panel was set to 30°C again, and the solution C was coated and dried under the same conditions as those for coating the solution A, thus obtaining a coating film. Thereafter, the outer surface of the effective portion of this panel was heated to 200°C and baked. An antireflection film comprising a two-layered optical interfering film (a high-refraction layer and a low-refraction layer) was thus obtained.

The average angle of inclination (deg), the average peak gap (µm), and the luminous regular reflection factor (%) of the obtained antireflection film were measured. Also, the glare and resolution were evaluated. Table 1 shows the results of the measurement and evaluation.

### Example 5

The outer surface of the effective portion of the panel of a color picture tube was cleaned by washing in the same manner as in Example 1. The outer surface of the effective portion was heated to 50°C. As the air spray nozzle, an Air Atomizing Nozzle PF 1650 + PA 67228-45°C available from Spraying System was used. By setting the flow rates of the solution A and air to 30 cc/min and 110 l/min, respectively, and the scanning speed of the spray from the air spray nozzle with respect to the outer surface of the effective portion of the panel to 350 mm/sec, the solution A was coated and dried to obtain a coating film. The outer surface of the effective portion of this panel was set to 30°C again, and the solution C was coated and dried under the same conditions as those for coating the solution A, thus obtaining a coating film. Thereafter, the outer surface of the effective portion of this panel was heated to 200°C and baked. An antireflection film comprising a two-layered optical interfering film (a high-refraction layer and a low-refraction layer) was thus obtained.

### Comparative Example 1

The outer surface of the effective portion of the panel of a color picture tube was cleaned by washing in the same manner as in Example 1. The outer surface of the effective portion was heated to 60°C. As the air spray nozzle, an Air Atomizing Nozzle PF 1650 + PA 67228-45°C available from Spraying System was used. By setting the flow rates of the solution A and air to 30 cc/min and 110 l/min, respectively, and the scanning speed of the spray with respect to the outer surface of the effective portion of the panel to 350 mm/sec, the solution A was coated and dried to obtain a coating film. The outer surface of the effective portion of this panel was set to 30°C and the solution C was coated and dried under the same conditions as those for coating the solution A, thus obtaining a coating film. In this case, the effective portion of the panel became whitish.

### Comparative Example 2

The outer surface of the effective portion of the panel of a color picture tube was cleaned by washing in the same manner as in Example 1. The outer surface of the effective portion was heated to 30°C. As the air spray nozzle, an Air Atomizing Nozzle PF 1650 + PA 67228-45°C available from Spraying System was used. By setting the flow rates of the solution A and air to 30 cc/min and 100 l/min, respectively, and the scanning speed of the spray with respect to the outer surface of the effective portion of the panel to 350 mm/sec, the solution A was coated and dried to obtain a coating film. The outer surface of the effective portion of this panel was heated to 50°C and the solution C was coated and dried under the same conditions as those for coating the solution A, thus obtaining a coating film. Thereafter, the outer surface of the effective portion of this panel was heated to 200°C and baked. An antireflection film comprising a two-layered optical interfering film (a high-refraction layer and a low-refraction layer) was thus obtained. In this case, glare occurred on the effective portion of the panel.

### Comparative Example 3

The outer surface of the effective portion of the panel of a color picture tube was cleaned by washing in the same manner as in Example 1. The outer surface of the effective portion was heated to 30°C. As the air spray nozzle, an Air Atomizing Nozzle PF 1650 + PA 67228-45°C available from Spraying System was used. By setting the flow rates of the solution A and air to 40 cc/min and 140 l/min, respectively, and the scanning speed of the spray from the air spray nozzle with respect to the outer surface of the effective portion of the panel to 500 mm/sec, the solution A was coated and dried. Glare occurred on the outer surface of the effective portion of the panel.

### Comparative Example 4

The outer surface of the effective portion of the panel of a color picture tube was cleaned by washing in the same manner as in Example 1. The outer surface of the effective portion was heated to 30°C. As the air spray nozzle, an Air Atomizing Nozzle PF 1650 + PA 67228-45°C available from Spraying System was used. By setting the flow rates of the solution A and air to 20 cc/min and 50 l/min, respectively, and the scanning speed of the spray from the air spray nozzle with respect to the outer surface of the effective portion of the panel to 500 mm/sec, the solution A was coated and dried. Glare occurred on the outer surface of the effective portion of the panel.

### Comparative Example 5

The outer surface of the effective portion of the panel of a color picture tube was cleaned by washing in the same manner as in Example 1. The outer surface of the effective portion was heated to 30°C. As the air spray nozzle, an Air Atomizing Nozzle PF 1650 + PA 67228-45°C available from Spraying System was used. By setting the flow rates of the solution A and air to 20 cc/min and 100 l/min, respectively, and the scanning speed of the spray from the air spray nozzle with respect to the outer surface of the effective portion of the panel to 200 mm/sec, the solution A was coated and dried. Glare occurred on the outer surface of the effective portion of the panel.

In particular, as shown in Table 1, in any of Examples 1 to 5, the average angle Δa of inclination and average peak gap Sm of the formed refraction layer respectively satisfy
0.1° ≦ Δa ≦ 0.5°
10 µm ≦ Sm ≦ 50 µm
In contrast to this, in any of Comparative Examples 1 to 5, the average peak gap of the formed refraction layer was increased to cause opaquing and glare.

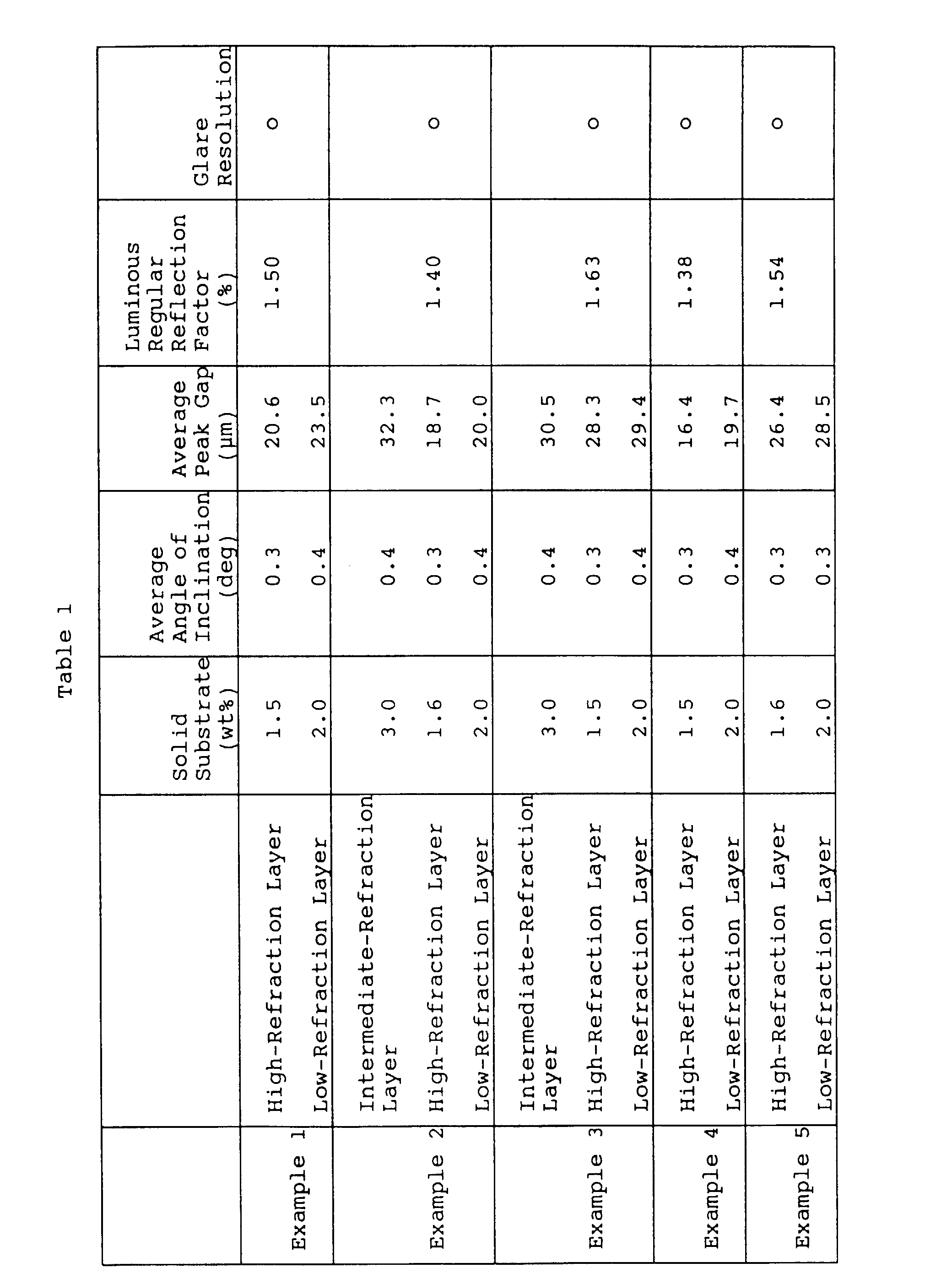

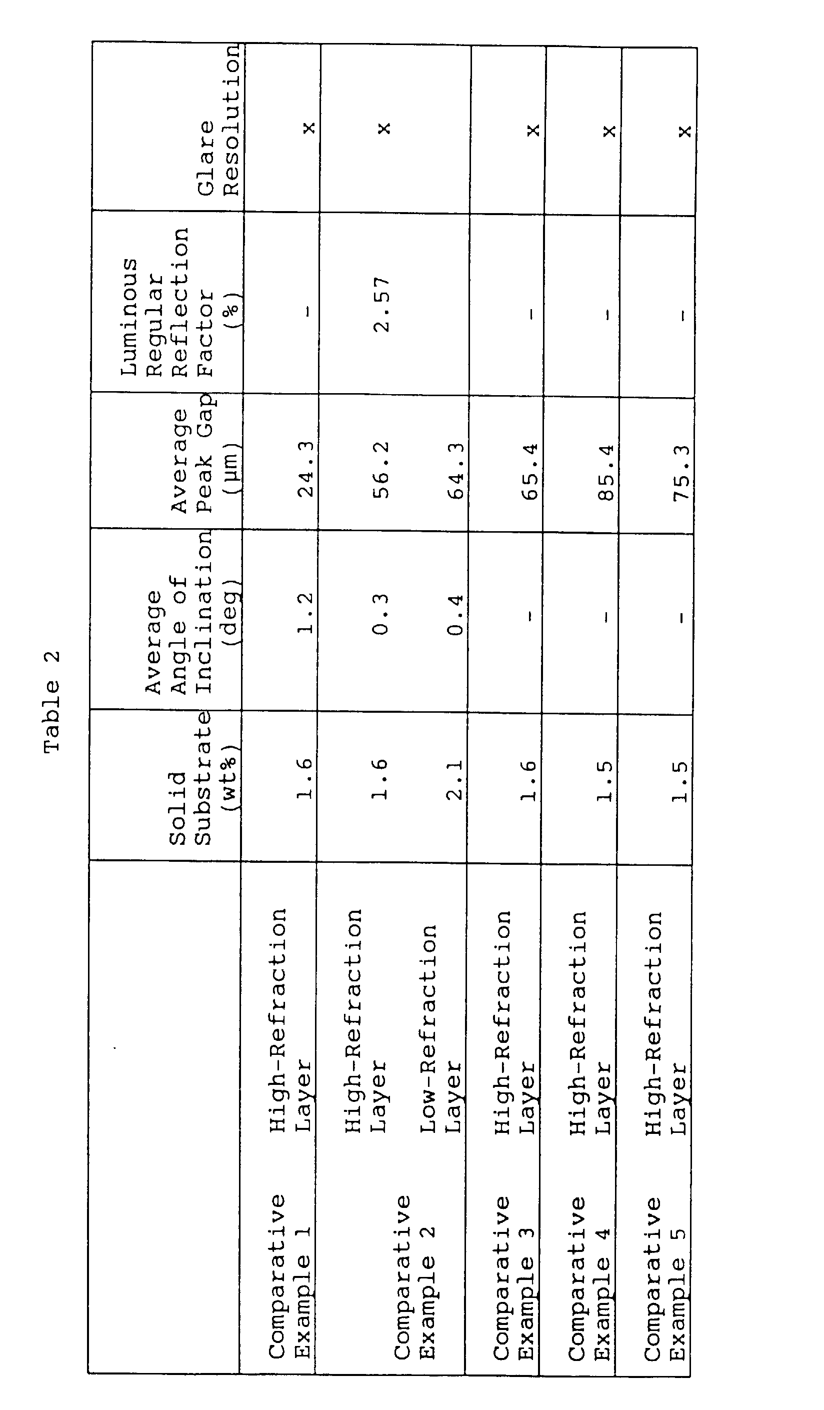

In the above embodiment, a color picture tube has been described. However, the present invention can also be applied to a cathode-ray tube other than a color picture tube.

## Claims

1. A method of manufacturing a cathode-ray tube, comprising the step of forming an optical film (15) by coating an optical interfering film forming solution on one surface of a faceplate (1) through an air spray nozzle, while scanning said air spray nozzle, said faceplate (1) having the other surface formed with a phosphor screen (3),
characterized in that said air spray nozzle is of an external mixing type having a structure to mix the optical interfering film forming solution and air outside said spray nozzle, and the step of forming the optical film (15) includes the step of forming a first optical film by coating a first optical interfering film forming solution on said surface of said faceplate and the step of forming a second optical film by coating a second optical interfering film forming solution on said first optical film through said air spray nozzle, while scanning said external mixing type air spray nozzle, thus forming an optical interfering film including said first and second optical films, and each of the step of forming said first optical film and the step of forming said second optical film is performed by maintaining the temperature of said faceplate at 20 to 50°C, setting flow rates of each optical interfering film forming solution and air from said air spray nozzle to 10 to 30 cc/min and 80 to 140 l/min, respectively, and setting a scanning speed of said air spray nozzle to 250 to 750 mm/sec, and each of said first and second optical interfering film forming solutions contains 1 to 5 wt% of a solid substance and 10 to 30% of an organic solvent having a boilinq point of 120°C to 200°C.

2. A method according to claim 1, characterized in that the flow rate of said optical interfering film forming solution is 15 to 25 cc/min.

3. A method according to claim 1, characterized in that the flow rate of air is 100 to 120 l/min.

4. A method according to claim 1, characterized in that the scanning speed of said air spray nozzle is 300 to 500 mm/sec.

5. A method according to claim 1, characterized in that said optical interfering film (15) has a surface roughness expressed by an average angle Δa of inclination of 0.1° to 0.5° and an average peak gap Sm of 10 µm to 50 µm, both of which being defined in the international standards ISO 4287/1-1984.

6. A method according to claim 5, characterized in that the average angle Δa of inclination is 0.1° to 0.3°.

7. A method according to claim 5, characterized in that the average peak gap Sm is 10 to 30 µm.

8. A method according to claim 5, characterized in that said optical interfering film has a luminous refraction factor of 1.8 or less.

9. A cathode-ray tube comprising a vacuum envelope including a faceplate (1), a phosphor screen (3) formed on an inner surface of said faceplate (1), and a multi-layered optical interfering film (15) formed on an outer surface of said faceplate (1), characterized in that said optical interfering film (15) has an outer surface formed with a plurality of depressions and projections, and has an average angle Δa of inclination and an average peak gap Sm, which are defined in the international standards ISO 4287/1-1984 of surface roughness of depressions and projections, and respectively satisfy relations expressed by following inequalities:
0.1° ≦ Δa ≦ 0.5°
10 µm ≦ Sm ≦ 50 µm

10. A tube according to claim 9, characterized in that the average angle Δa of inclination is 0.1° to 0.3°.

11. A tube according to claim 9, characterized in that the average angle Δa of inclination is 0.1° to 0.2°.

12. A tube according to claim 9, characterized in that the average peak gap Sm is 10 to 30 µm.

13. A tube according to claim 9, characterized in that the average peak gap Sm is 10 to 20 µm.

14. A tube according to claim 9, characterized in that said optical interfering film (15) has a luminous refraction factor of 1.8 or less.

## Patentansprüche

1. Verfahren zum Herstellen einer Kathodenstrahlröhre mit dem Schritt eines Bildens eines optischen Films (15), indem eine einen optischen Interferenzfilm bildende Lösung auf einer Oberfläche einer Stirnplatte (1) durch eine Luftsprühdüse als Schicht aufgebracht wird, während die Luftsprühdüse scannend bewegt wird, wobei die andere Oberfläche der Stirnplatte (1) mit einem Leuchtstoffschirm (3) geschaffen ist,
dadurch gekennzeichnet, daß die Luftsprühdüse von einem externen Mischtyp ist, der eine Struktur aufweist, um die den optischen Interferenzfilm bildende Lösung und Luft außerhalb der Sprühdüse zu mischen, und der Schritt eines Bildens des optischen Films (15) den Schritt eines Bildens eines ersten optischen Films, indem eine erste, einen optischen Interferenzfilm bildende Lösung auf der Oberfläche der Stirnplatte als Schicht aufgebracht wird, und den Schritt eines Bildens eines zweiten optischen Films enthält, indem eine zweite, einen optischen Interferenzfilm bildende Lösung auf dem ersten optischen Film durch die Luftsprühdüse als Schicht aufgebracht wird, während die Luftsprühdüse vom externen Mischtyp scannend bewegt wird, wobei so ein optischer Interferenzfilm gebildet wird, der den ersten und zweiten optischen Film enthält, und sowohl der Schritt eines Bildens des ersten optischen Films als auch der Schritt eines Bildens des zweiten optischen Films durchgeführt wird, indem die Temperatur der Stirnplatte bei 20 bis 50°C gehalten, Stromraten von jeder einen optischen Interferenzfilm bildenden Lösung und Luft von der Luftsprühdüse auf 10 bis 30 cm³/Min. bzw. 80 bis 140 1/Min. eingestellt und die Scan-Geschwindigkeit der Luftsprühdüse auf 250 bis 750 mm/s eingestellt wird, und jede der einen ersten und zweiten optischen Interferenzfilm bildenden Lösungen 1 bis 5 Gew.-% einer festen Substanz und 10 bis 30 % eines organischen Lösungsmittels mit einem Siedepunkt von 120°C bis 200°C enthält.

2. Verfahren nach Anspruch 1, dadurch gekennzeichnet, daß die Stromrate der einen optischen Interferenzfilm bildenden Lösung 15 bis 25 cm³/Min. beträgt.

3. Verfahren nach Anspruch 1, dadurch gekennzeichnet, daß die Stromrate von Luft 100 bis 120 1/Min. beträgt.

4. Verfahren nach Anspruch 1, dadurch gekennzeichnet, daß die Scan-Geschwindigkeit der Luftsprühdüse 300 bis 500 mm/s beträgt.

5. Verfahren nach Anspruch 1, dadurch gekennzeichnet, daß der optische Interferenzfilm (15) eine Oberflächenrauhigkeit aufweist, die durch einen durchschnittlichen Neigungswinkel Δa von 0,1° bis 0,5° und eine durchschnittliche Spitzenlücke Sm von 10 µm bis 50 µm ausgedrückt wird, die beide in den internationalen Standards ISO 4287/1-1984 definiert sind.

6. Verfahren nach Anspruch 5, dadurch gekennzeichnet, daß der durchschnittliche Neigungswinkel Δa 0,1° bis 0,3° beträgt.

7. Verfahren nach Anspruch 5, dadurch gekennzeichnet, daß die durchschnittliche Spitzenlücke Sm 10 bis 30 µm beträgt.

8. Verfahren nach Anspruch 5, dadurch gekennzeichnet, daß der optische Interferenzfilm einen Lichtbrechungsfaktor von 1,8 oder weniger aufweist.

9. Kathodenstrahlröhre mit einer Vakuumhülle, die eine Stirnplatte (1), einen auf einer Innenfläche der Stirnplatte (1) gebildeten Leuchtstoffschirm (3) und einen optischen Mehrschicht-Interferenzfilm (15) enthält, der auf einer Außenfläche der Stirnplatte (1) gebildet ist, dadurch gekennzeichnet, daß der optische Interferenzfilm (15) eine Außenfläche aufweist, die mit einer Vielzahl von Vertiefungen und Vorsprüngen geschaffen ist, und einen durchschnittlichen Neigungswinkel Δa und eine durchschnittliche Spitzenlücke Sm aufweist, die in den internationalen Standards ISO 4287/1-1984 einer Oberflächenrauhigkeit aus Vertiefungen und Vorsprüngen definiert sind und jeweils Beziehungen erfüllen, die durch folgende Ungleichungen ausgedrückt werden:
0,1° ≤ Δa ≤ 0,5°
10 µm ≤ Sm ≤ 50 µm.

10. Röhre nach Anspruch 9, dadurch gekennzeichnet, daß der durchschnittliche Neigungswinkel Δa 0,1° bis 0,3° beträgt.

11. Röhre nach Anspruch 9, dadurch gekennzeichnet, daß der durchschnittliche Neigungswinkel Δa 0,1° bis 0,2° beträgt.

12. Röhre nach Anspruch 9, dadurch gekennzeichnet, daß die durchschnittliche Spitzenlücke Sm 10 bis 30 µm beträgt.

13. Röhre nach Anspruch 9, dadurch gekennzeichnet, daß die durchschnittliche Spitzenlücke Sm 10 bis 20 µm beträgt.

14. Röhre nach Anspruch 9, dadurch gekennzeichnet, daß der optische Interferenzfilm (15) einen Lichtbrechungsfaktor von 1,8 oder weniger aufweist.

## Revendications

1. Procédé de fabrication d'un tube à rayons cathodiques, comprenant l'étape de formation d'un film optique (15) en déposant une solution de formation de film d'interférence optique sur une surface d'une plaque avant (1) à travers un ajutage d'air, tout en balayant ledit ajutage d'air, ladite plaque avant (1) ayant l'autre surface formée avec un écran à luminophores (3),
caractérisé en ce que ledit ajutage d'air est d'un type à mélange externe ayant une structure pour mélanger la solution de formation de film d'interférence optique et l'air hors dudit ajutage, et l'étape de formation du film optique (15) comprend l'étape de formation d'un premier film optique en déposant une première solution de formation de film d'interférence optique sur ladite surface de ladite plaque avant et l'étape de formation d'un second film optique en déposant une seconde solution de formation de film d'interférence optique sur ledit premier film optique à travers ledit ajutage d'air, tout en balayant ledit ajutage d'air de type à mélange externe, en formant ainsi un film d'interférence optique incluant lesdits premier et second films optiques, et chacune de l'étape de formation dudit premier film optique et de l'étape de formation dudit second film optique est exécutée en maintenant la température de ladite plaque avant à 20 à 50°C, en établissant les débits de chaque solution de formation de film d'interférence optique et de l'air provenant dudit ajutage d'air à 10 à 30 cm³/minute et 80 à 140 litres/minute, respectivement, et en établissant la vitesse de balayage dudit ajutage d'air à 250 à 750 mm/seconde, et chacune desdites première et seconde solutions de formation de film d'interférence optique contient 1 à 5% en poids d'une substance solide et 10 à 30% d'un solvant organique ayant un point d'ébullition de 120°C à 200°C.

2. Procédé selon la revendication 1, caractérisé en ce que le débit de ladite solution de formation de film d'interférence optique est 15 à 25 cm³/minute.

3. Procédé selon la revendication 1, caractérisé en ce que le débit de l'air est 100 à 120 litres/minute.

4. Procédé selon la revendication 1, caractérisé en ce que la vitesse de balayage dudit ajutage d'air est 300 à 500 mm/seconde.

5. Procédé selon la revendication 1, caractérisé en ce que ledit film d'interférence optique (15) a une rugosité de surface exprimée par un angle moyen Δa d'inclinaison de 0,1° à 0,5° et un intervalle de crête moyen Sm de 10 µm à 50 µm, les deux étant définis dans les normes internationales ISO 4287/1-1984.

6. Procédé selon la revendication 5, caractérisé en ce que l'angle moyen Δa d'inclinaison est 0,1° à 0,3°.

7. Procédé selon la revendication 5, caractérisé en ce que l'intervalle de crête moyen Sm est 10 à 30 µm.

8. Procédé selon la revendication 5, caractérisé en ce que ledit film d'interférence optique a un indice de réfraction de la lumière de 1,8 ou inférieur.

9. Tube à rayons cathodiques comprenant une enveloppe à vide incluant une plaque avant (1), un écran à luminophores (3) formé sur une surface intérieure de ladite plaque avant (1), et un film d'interférence optique à plusieurs couches (15) formé sur une surface extérieure de ladite plaque avant (1), caractérisé en ce que ledit film d'interférence optique (15) a une surface extérieure formée avec une pluralité de creux et de saillies, et a un angle moyen Δa d'inclinaison et un intervalle de crête moyen Sm, qui sont définis dans les normes internationales ISO 4287/1-1984 de rugosité de surface de creux et de saillies, et satisfont respectivement des relations exprimées par les inégalités suivantes:
0,1° ≤ Δa ≤ 0,5°
10 µm ≤ Sm ≤ 50 µm.

10. Tube selon la revendication 9, caractérisé en ce que l'angle moyen Δa d'inclinaison est 0,1° à 0,3°.

11. Tube selon la revendication 9, caractérisé en ce que l'angle moyen Δa d'inclinaison est 0,1° à 0,2°.

12. Tube selon la revendication 9, caractérisé en ce que l'intervalle de crête moyen Sm est 10 à 30 µm.

13. Tube selon la revendication 9, caractérisé en ce que l'intervalle de crête moyen Sm est 10 à 20 µm.

14. Tube selon la revendication 9, caractérisé en ce que ledit film d'interférence optique (15) a un indice de réfraction de la lumière de 1,8 ou inférieur.
